# EUROPÄISCHE PATENTSCHRIFT

(11) **EP 0 553 146 B1**
(45) Veröffentlichungstag und Bekanntmachung des Hinweises auf die Patenterteilung: **10.05.1995**
(21) Anmeldenummer: 91917707.1
(22) Anmeldetag: 08.10.1991
(51) Int. Cl.: B01D 53/34, B01D 53/68

(54) **VERFAHREN ZUR REINIGUNG VON ABGAS MIT HOHEM CHLORIDGEHALT**
PROCESS FOR PURIFYING FLUE GASES WITH A HIGH CHLORIDE CONTENT
PROCEDE D'EPURATION DE GAZ DE FUMEE A HAUTE TENEUR EN CHLORURES

(30) Priorität: 17.10.1990 DE 4032945
(43) Veröffentlichungstag der Anmeldung: 04.08.1993
(73) Patentinhaber: Noell-KRC Umwelttechnik GmbH, 97064 Würzburg (DE)
(72) Erfinder: KÜRZINGER, Karl, D-8702 Helmstadt (DE); MENSING, Andreas, D-8706 Höchberg (DE); STEPHAN, Rainer, D-8501 Kalchreuth (DE); THOME, Ernst, D-8706 Höchberg (DE)
(74) Vertreter: Werner, Hans-Karsten, Dr.Dipl.-Chem.
(86) Internationale Anmeldenummer: EP9101910
(87) Internationale Veröffentlichungsnummer: WO9206771

(56) Entgegenhaltungen:
- EP-A- 0 169 997
- EP-A- 0 393 402
- DE-A- 3 611 886
- FR-A- 2 347 083

## Beschreibung

Gegenstand der vorliegenden Erfindung ist ein Verfahren zur Reinigung von Abgas mit hohem Chloridgehalt aus Müll- und Sondermüllverbrennungsanlagen durch mehrstufige Absorption der Verunreinigungen, wobei zunächst die stark sauren Bestandteile des Abgases, wie HCl und HF, mit Wasser und/oder Laugen ausgewaschen werden und in späteren Stufen die weniger sauren Bestandteile des Abgases wie SO₂ oder NOₓ entfernt werden.

Neben SO₂ und NOₓ spielen bei der Reinigung von Rauchgasen auch HCl und HF eine große Rolle, insbesondere dann, wenn die Rauchgase aus einer Müll- oder Sondermüllverbrennungsanlage stammen. Je nach Zusammensetzung des zur Verbrennung gelangten Mülls kann der HCl-Gehalt des Abgases sogar mehr als 10 g/m³ betragen. Solch hohe HCl-Gehalte bedürfen in der Regel einer besonderen Behandlung in Rauchgasreinigungsanlagen. Dies geschieht heutzutage vor allem dadurch, daß der SO₂-Reinigungsstufe eine HCl-Abscheidung vorgeschaltet wird. Die HCl-Abscheidung erfolgt hierbei oft simultan mit einer Quenchung des Rauchgases, wobei meist schon alkalische Chemikalien zugesetzt werden. Weiterhin wird bei dieser Quenchung auch ein großer Teil des im Abgas verbliebenenen Reststaubes abgeschieden.

Die bei diesem Abscheideprozeß gewonnene, meist noch salzsaure Lösung bzw. Suspension, enthält im allgemeinen den größten Teil der im Rauchgas enthaltenen Schwermetalle. Meist wird diese salzsaure Lösung bzw. Suspension einer Abwasserbehandlung zugeführt. Durch Zugabe von Alkali- bzw. Erdalkalicarbonaten oder -hydroxiden erfolgt eine Neutralisation und Ausfällung der Schwermetalle. Nach Filtration der Suspension wird in der Regel das Filtrat einem Vorfluter zugeleitet oder eingedampft und der Rückstand einer Deponie zugeführt. Bei der Einleitung in einen Vorfluter enthält das Abwasser meist noch größere Mengen löslicher Salze sowie gewisse Restgehalte an Schwermetallen.

Sofern man aus diesen Rückständen verwertbare Salze, wie Kochsalz oder Calciumchlorid, gewinnen will, muß im allgemeinen eine aufwendige und effektive Abwasseraufbereitung der Eindampfung vorgeschaltet sein und unter Umständen die während des Eindampfens ausfallende Kristallmasse ein- bis mehrfach umkristallisiert werden, was mit entsprechend hohen apparativen und energetischen Aufwand verbunden ist und trotzdem im allgemeinen noch nicht die von der Praxis geforderten Reinheitsgrade für die Salze sicherstellt.

Die EP-A-0 169 997 beschreibt ein Verfahren zur Reinigung von Rauchgas, das bei der Verbrennung von Abfallstoffen entsteht und sowohl Feststoffe unterschiedlichster Zusammensetzung als auch Schadgase und Schwermetalle enthält. Der im Rauchgas enthaltene Wasserdampf dient dazu, das HCl und/oder die Schwermetalle in Dampfform abzuscheiden.

Es ist also ein Verfahren, bei dem bei der Rauchgasreinigung sowohl die gasförmigen Schwermetallschadstoffe (insbesondere Quecksilber) als auch vor allem die in den Flugstäuben löslich vorliegenden Schwermetallschadstoffe aus dem Rauchgasreinigungsprozeß entfernt werden. Eine Abreinigung von HCl, SO₂ und NOₓ wird ebenfalls erreicht. Es erfolgt aber keine Abtrennung von HF oder löslichen Fluoriden, so daß diese wiederverwertet werden können.

Die DE-A-36 11 886 beschreibt ein Verfahren zur Entfernung von HCl und Chlor aus Verbrennungsgasen. Das Ausgangsmaterial entsteht durch Verbrennung chlorhaltiger, organischer Rückstände der chemischen Industrie, wobei diese Verbrennungsgase schon von vornherein sehr hohe Mengen an HCl und darüber hinaus auch gewisse Mengen an Chlor enthalten. Das Verfahren dient dazu, Salzsäure zu gewinnen. Die Alkaliwäsche dient ausschließlich dazu, bei einem pH-Wert von 7,1 bis 7,5 restliches HCl und Cl₂ zu binden, ohne CO₂ zu absorbieren. Eine Abtrennung von Schwermetallen und Fluoriden, wie sie aus Abgasen von Müll- und Sondermüllverbrennungsanlagen entstehen, wird hier nicht erwähnt.

Die Erfindung hat sich die Aufgabe gestellt, das Verfahren zur Reinigung von Abgas mit hohem Chloridgehalt aus Müll- und Sondermüllverbrennungsanlagen weiter zu verbessern, zu vereinfachen und sicherer zu machen, wobei möglichst große Mengen wiederverwendbarer Produkte entstehen und nur wenig das Abwasser oder Deponien belastende Abfallstoffe entstehen. Insbesondere hat sich die Erfindung die Aufgabe gestellt, die Abscheidung der stark sauren Bestandteile des Abgases, wie HCl und HF so zu gestalten, daß hieraus zuverlässig und preiswert wiederverwendbare Salze und Substanzen gewonnen werden. Das Verfahren geht aus von solchen Verfahren, bei denen in einer Vorstufe die stark sauren Bestandteile des Abgases, wie HCl und HF, mit Wasser ausgewaschen werden, welches zunächst bis zu 20 g HCl/l enthält und bei denen in späteren Stufen die weniger sauren Bestandteile des Abgases, wie SO₂ und NOₓ entfernt werden.

Die Aufgabe kann dadurch überraschend einfach gelöst werden, daß in einer Quenchervorstufe mit Wasser vorgewaschen wird, dann in mindestens einer nachfolgenden Waschstufe mit Wasser nachgewaschen und dann in mindestens einer weiteren nachfolgenden Waschstufe nachgewaschen wird bei pH-Werten < 3, vorzugsweise pH-Werten < 1, unter Neutralisation mit Laugen, vorzugsweise mit Natronlauge oder Calciumhydroxid, und erst danach in üblicher Weise entschwefelt und entstickt wird, wobei die Waschlösung aus der/den ersten Waschstufe(n) mit Wasser in den Quencher zurückgeleitet wird und die mit Lauge neutralisierte Waschlösung bei Überschreitung der gewünschten Maximalkonzentrationen an Salzen aus dem Verfahren ausgeschleust wird und wobei in der ersten Waschlösung nach der Quencherstufe Aluminiumchlorid zugesetzt wird und das ausgefällte Aluminiumfluorid vor der Rückführung in die Quencherstufe abgetrennt wird.

Überraschenderweise hat sich gezeigt, daß erfindungsgemäß in der Quencherstufe und mindestens einer nachfolgenden Waschstufe mit Wasser außer restlicher Flugasche praktisch die gesamte Menge an Schwermetallen und Fluorid abgeschieden wird, so daß in der oder den nachfolgenden Waschstufen mit Natronlauge oder Calciumhydroxid, Kochsalz oder Calciumchlorid mit hoher Reinheit anfällt. Der Quenchersumpf besteht neben den Schwermetallen und gegebenenfalls dem Fluorid aus Salzsäure entsprechend dem Gleichgewichtspartialdruck mit dem Chlorwasserstoff im Rauchgas. Ab Erreichen dieser Gleichgewichtskonzentration enthält das Rauchgas nach der Quencherstufe wieder die ursprüngliche HCl-Konzentration.

In der oder den nachfolgenden Waschstufen mit Neutralisation mit Laugen, wie Natronlauge oder Calciumhydroxid, wird das HCl-Gas nahezu restlos aus dem Rauchgas entfernt, ohne daß es bereits wesentlich zur Abscheidung von SO₂ und NOₓ kommt. Von entscheidender Bedeutung ist der pH-Wert, der in all diesen Waschstufen auf < 3, vorzugsweise < 1, gehalten wird. Die Zufuhr der Laugen, wie Natronlauge oder des Calciumhydroxids, erfolgt so stets nur in dem Maße, wie sie zur Neutralisation des absorbierten HCl benötigt werden. Die Regelung der Zufuhr der Laugen erfolgt somit zweckmäßigerweise jeweils über die pH-Werte der Waschlösungen.

Das Absorptionsvermögen der Waschlösungen für HCl sinkt mit steigender Konzentration an gelösten Salzen, wie Kochsalz oder Calciumchlorid. Erfindungsgemäß sind daher vorzugsweise 2 Waschstufen mit Neutralisation vorgesehen. Während in der ersten Waschstufe eine Aufkonzentrierung der Salzlösungen bis zu einem gewünschten Maximalwert erfolgt, dienen die zweite und gegebenenfalls weiteren Waschstufen der vollständigeren Entfernung des HCl aus dem Rauchgas. Die Ausschleusung der Waschlösungen aus den jeweiligen Waschstufen erfolgt zweckmäßigerweise über die Konzentration an Salzen. Diese kann am einfachsten über die Leitfähigkeit oder Dichte gemessen werden. Prinzipiell wäre es zwar auch möglich, den Gesamtchloridgehalt zu bestimmen, jedoch ist dies mit den bisher bekannten Methoden wesentlich aufwendiger.

Letztendlich wird aus der ersten Waschstufe mit Neutralisation durch Natronlauge eine erstaunlich reine und nahezu neutralisierte Kochsalzlösung ausgeschleust. Die Reinheit und die Konzentration dieser Kochsalzlösungen sind so hoch, daß sie sogar mit relativ geringem Aufwand für die Chloralkalielektrolyse eingesetzt werden können. Auch das abgetrennte Calciumchlorid ist erstaunlich sauber und kann wie anderes reines Calciumchlorid eingesetzt werden. Gewünschtenfalls können die Salzlösungen auch bis zur Trockne eingedampft werden und so feste Salze gewonnen werden. Als besonders vorteilhaft hat sich die Herstellung von reinem, festen Natriumchlorid erwiesen.

Insbesondere bei relativ hohem Gehalt an HF hat es sich als zweckmäßig erwiesen, der ersten Waschstufe nach der Quencherstufe eine wasserlösliche fluoridbindende Substanz zuzusetzen. Als fluoridbindende Substanz kommt vor allem Aluminiumchlorid, aber gegebenenfalls auch Calciumchlorid oder Borsäure in Frage. Aus der ersten Waschlösung werden somit die restliche übergerissene Flugasche, Schwermetalle und vor allem die gefällten Fluoride ausgeschleust. Gewünschtenfalls kann auch der Quenchersumpf aufgetrennt und aufgearbeitet werden, um weitere verwertbare Produkte zu gewinnen. Am einfachsten erfolgt dies durch fraktionierte Fällung, beispielsweise mit Hilfe von Calciumhydroxid oder Natronlauge.

Sofern hohe Fluoridkonzentrationen vorliegen, können auch die ausgefällten Fluoridsalze und Fluoridverbindungen abgetrennt und wiederverwertet werden.

Es hat sich gezeigt, daß es trotz des zunächst größer erscheinenden Aufwandes von mehreren separaten Waschstufen und Waschlösungskreisläufen wesentlich preiswerter und einfacher ist, die vorab abtrennbaren Verunreinigungen, wie Flugasche, Schwermetalle, HF und HCl, abzutrennen und in verwertbare Produkte zu überführen, anstatt sie gemeinsam abzutrennen und später zu versuchen, hieraus wieder brauchbare Fraktionen rückzugewinnen.

Besonders effizient arbeitet das erfindungsgemäße Verfahren, wenn der Überriß zwischen den Waschstufen durch Tropfenabscheider vermindert wird. Durch den Einbau von Tropfenabscheidern kann der Überriß von einer Waschstufe zur anderen von ca. 10% auf ca. 2 bis 3% vermindert werden. Anstatt mehrerer Waschstufen und des damit verbundenen Aufwandes kann man durch Tropfenabscheider mit weniger Waschstufen auskommen und dennoch die gleichen Effekte erreichen.

Gemäß einer weiteren Variante des erfindungsgemäßen Verfahrens wird aus einer der sauren Waschstufen nach dem Quencher destillativ Salzsäure abgetrennt, das Kondensat über Aktivkohle gereinigt und unter Kühlung mit Natronlauge neutralisiert zu einer Kochsalzlösung von mindestens 100 g, vorzugsweise 150 bis 250 g NaCl/l. Es hat sich gezeigt, daß auch bei dieser Verfahrensvariante der Reststaub, Schwermetalle und organische Verunreinigungen überwiegend im Sumpf der Destillation angereichert werden und die Reste organischer Verbindungen, die mit den Salzsäure-Brüden übergehen, durch einen Aktivkohle-Adsorber entfernt werden können. Wird die so erhaltene Salzsäure unter Kühlung mit Natronlauge neutralisiert, erhält man Kochsalzlösungen bzw. beim Eindampfen bis zum Salz feste Salze, die so rein sind, daß sie als hochwertige Sole oder reine Salze weiterverwendet werden können. Der Aufwand zur Reinigung der Salze ist erfindungsgemäß geringer als die herkömmliche Reinigung der Salze, insbesondere von Kochsalz durch stufenweises Eindampfen und Ausfällen der Kristallmasse.

Gleichzeitig gelingt es auf diese Art und Weise, die Abgase mit hohem Chloridgehalt besser, sicherer und wirtschaftlicher zu reinigen, wobei weniger Abwasser und weniger die Deponien belastende Abfallstoffe entstehen.

Das erfindungsgemäße Verfahren kann beispielsweise eingesetzt werden in unmittelbarer Nähe einer Chloralkalielektrolyse, bei der meist auch chlorierte Abfälle entstehen, die in der Sondermüllverbrennung beseitigt werden sollen. Auch die zum Neutralisieren des Chlorwasserstoffs benötigte Natronlauge steht unmittelbar zur Verfügung. Die rückgewonnene Kochsalzlösung kann ohne großen Aufwand erneut der Chloralkalielektrolyse zugeführt werden, so daß praktisch alle Nebenprodukte einer derartigen Anlage wiedergewonnen und wiederverwertet werden.

## Patentansprüche

1. Verfahren zur Reinigung von Abgas mit hohem Chloridgehalt aus Müll- und Sondermüllverbrennungsanlagen durch mehrstufige Absorption der Verunreinigungen, wobei zunächst die stark sauren Bestandteile des Abgase, wie HCl und HF, mit Wasser und/oder Laugen ausgewaschen werden und in späteren Stufen die weniger sauren Bestandteile des Abgases SO₂ und NOₓ entfernt werden, dadurch gekennzeichnet, daß in einer Quenchervorstufe mit Wasser vorgewaschen wird, dann in mindestens einer nachfolgenden Waschstufe mit Wasser nachgewaschen und dann in mindestens einer weiteren nachfolgenden Waschstufe nachgewaschen wird bei pH-Werten < 3, vorzugsweise pH-Werten < 1, unter Neutralisation mit Laugen, vorzugsweise mit Natronlauge oder Calciumhydroxid, und erst danach in üblicher Weise entschwefelt und entstickt wird, wobei die Waschlösung aus der/den ersten Waschstufe(n) mit Wasser in den Quencher zurückgeleitet wird und die mit Lauge neutralisierte Waschlösung bei Überschreitung der gewünschten Maximalkonzentrationen an Salzen aus dem Verfahren ausgeschleust wird und wobei in der ersten Waschlösung nach der Quencherstufe Aluminiumchlorid zugesetzt wird und das ausgefällte Aluminiumfluorid vor der Rückführung in die Quencherstufe abgetrennt wird.

2. Verfahren gemäß Anspruch 1, dadurch gekennzeichnet, daß der Überriß zwischen den Waschstufen durch Tropfenabscheider vermindert wird.

3. Verfahren gemäß Anspruch 1 oder 2, dadurch gekennzeichnet, daß nach der Quencherstufe mindestens in zwei Waschstufen mit Wasser gewaschen wird und die Waschlösung der jeweils nachfolgenden Waschstufe bei Überschreitung einer vorgegebenen Maximalkonzentration an Säure teilweise in die jeweils vorhergehende Waschstufe überführt wird.

4. Verfahren gemäß einem der Ansprüche 1 bis 3, dadurch gekennzeichnet, daß nach den Waschstufen mit Wasser mindestens in zwei Waschstufen die Waschlösungen mit Natronlauge oder Calciumhydroxid neutralisiert werden und die Waschlösung der jeweils nachfolgenden Waschstufe bei Überschreitung einer vorgegebenen Maximalkonzentration an Salzen teilweise in die vorhergehende Waschstufe überführt wird.

5. Verfahren gemäß einem der Ansprüche 1 bis 4, dadurch gekennzeichnet, daß die Zufuhr der Natronlauge oder des Calciumhydroxids zu den jeweiligen Waschlösungen über die pH-Werte geregelt wird.

6. Verfahren gemäß einem der Ansprüche 1 bis 3, dadurch gekennzeichnet, daß die Ausschleusung salzhaltiger Waschlösungen aus den jeweiligen Waschstufen über die Leitfähigkeit geregelt wird.

7. Verfahren gemäß einem der Ansprüche 1 bis 3, dadurch gekennzeichnet, daß aus einer der sauren Waschstufen nach dem Quencher destillativ Salzsäure abgetrennt, das Kondensat über Aktivkohle gereinigt und unter Kühlung mit Natronlauge neutralisiert wird zu einer Kochsalzlösung von mindestens 100 g, vorzugsweise 150 bis 250 g NaCl/l.

8. Verfahren gemäß einem der Ansprüche 6 oder 7, dadurch gekennzeichnet, daß die Salzlösungen anschließend bis zum festen Salz eingedampft werden.

## Claims

1. A process for purifying flue gas having a high chloride content, and more specifically of flue gas from waste and special waste incineration plants, by means of a multi-stage absorption of contaminants, wherein the strongly acidic components of the flue gas such as HCl and HF initially are washed out with water and/or alkaline solutions, and in subsequent stages the less acidic flue gas components such as SO₂ and NOₓ are removed, characterized in that, in a quencher pre-stage, pre-washing with water is effected, followed by washing once more with water in at least one subsequent washing stage, then washing once more with water in at least one further subsequent washing stage at pH values of < 3, and preferably at pH values of < 1, by a neutralization with alkaline solutions, preferably sodium hydroxide solution or calcium hydroxide, and only then desulfurizing and denitrizing in the usual fashion, where the washing solution from the first washing stage(s) is recycled into the quencher, and the washing solution neutralized with alkaline solution is removed from the process once the desired maximum concentrations of salts are exceeded, and aluminum chloride is added to the first washing solution after the quencher stage and the precipitated aluminum fluoride is separated off prior to recycling into the quencher stage.

2. The process according to claim 1, characterized in that entrainment between washing stages is prevented by mist eliminators.

3. The process according to claim 1 or 2, characterized in that downstream of the quencher stage, washing with water is effected in at least two washing stages, and the washing solution of each subsequent washing stage is partially transferred to the preceding washing stage on exceeding a pre-set maximum concentration of acid.

4. The process according to one of claims 1 to 3, characterized in that, after the water washing stages, the washing solutions are neutralized in at least two washing stages with a sodium hydroxide solution or calcium hydroxide and the washing solution of each subsequent washing stage is partially transferred to the preceding washing stage once a pre-set maximum concentration of salts is exceeded.

5. The process according to anyone of claims 1 to 4, characterized in that the addition of sodium hydroxide solution or of calcium hydroxide to the respective washing solution is controlled via pH values.

6. The process according to one of claims 1 to 3, characterized in that the removal of salt-containing washing solutions from each washing stage is controlled via conductivity.

7. The process according to one of claims 1 to 3, characterized in that hydrochloric acid is removed by distillation from one of the acid washing stages downstream of the quencher, the condensate is purified over activated carbon and is neutralized with sodium hydroxide solution with cooling to give a sodium chloride solution of at least 100 g, preferably 150 to 250 g of NaCl per liter.

8. The process according to either of claims 6 or 7, characterized in that the salt solutions are subsequently evaporated to give solid salt.

## Revendications

1. Procédé de purification de gaz de fumée à haute teneur en chlorures, provenant d'usines d'incinération d'ordures ménagères et d'ordures spéciales, par absorption des impuretés en plusieurs opérations, procédé selon lequel les constituants fortement acides du gaz de fumée, comme HCl et HF, sont d'abord éliminés par lavage avec de l'eau et/ou des lessives, et les constituants moins acides du gaz de fumée, à savoir SO₂ et NOₓ, sont éliminés lors d'opérations ultérieures,
caractérisé en ce qu'on effectue un lavage préalable avec de l'eau lors d'une opération préalable de refroidissement par injection de liquide, ensuite on effectue un post-lavage avec de l'eau lors d'au moins une opération ultérieure de lavage, et, ensuite, on effectue un post-lavage lors d'au moins une autre opération ultérieure de lavage pour des valeurs de pH < 3, de préférence pour des valeurs de pH < 1, avec neutralisation par des lessives, de préférence par une lessive de soude ou par de l'hydroxyde de calcium, et ce n'est qu'ensuite qu'on effectue l'extraction des composés de soufre et d'azote d'une manière usuelle,
la solution de lavage provenant de la première opération ou des premières opérations de lavage étant recyclée avec de l'eau dans l'appareil de refroidissement par injection de liquide, et la solution de lavage neutralisée avec la lessive étant éliminée du processus en cas de dépassement de la concentration maximale souhaitée des sels,
du chlorure d'aluminium étant ajouté à la première solution de lavage après l'opération de refroidissement par injection de liquide, et le fluorure d'aluminium précipité étant séparé avant le recyclage dans l'opération de refroidissement par injection de liquide.

2. Procédé selon la revendication 1, caractérisé en ce que l'entraînement par distillation entre les opérations de lavage est diminué grâce à un séparateur de gouttes.

3. Procédé selon la revendication 1 ou 2, caractérisé en ce qu'on effectue un lavage avec de l'eau, en au moins deux opérations de lavage, après l'opération de refroidissement par injection de liquide, et la solution de lavage utilisée dans chaque opération de lavage est ramenée en partie dans l'opération précédente de lavage en cas de dépassement de la concentration maximale prédéfinie d'acide.

4. Procédé selon l'une des revendications 1 à 3, caractérisé en ce qu'après les opérations de lavage avec de l'eau au moins dans deux opérations de lavage, les solutions de lavage sont neutralisées avec une lessive de soude ou de l'hydroxyde de calcium, et la solution de lavage utilisée dans chaque opération de lavage est partiellement ramenée dans l'opération précédente de lavage en cas de dépassement de la concentration maximale prédéfinie en sels.

5. Procédé selon l'une des revendications 1 à 4, caractérisé en ce que l'addition de la lessive de soude ou de l'hydroxyde de calcium dans les solutions respectives de lavage est ajustée en fonction des valeurs de pH.

6. Procédé selon l'une des revendications 1 à 3, caractérisé en ce que l'élimination des solutions salines de lavage des différentes opérations de lavage est régulée en fonction de la conductivité.

7. Procédé selon l'une des revendications 1 à 3, caractérisé en ce qu'on sépare, par distillation, de l'acide chlorhydrique provenant d'une des opérations de lavage acide, après l'opération de refroidissement par injection de liquide, on purifie le condensat sur du charbon actif et, en le refroidissant, on le neutralise avec une lessive de soude pour obtenir une solution de chlorure de sodium contenant au moins 100 g, de préférence de 150 à 250 g de NaCl/l.

8. Procédé selon la revendication 6 ou 7, caractérisé en ce qu'ensuite, on concentre les solutions salines, par évaporation, jusqu'à l'obtention du sel à l'état solide.
